# EUROPEAN PATENT APPLICATION

(11) **EP 1 918 246 A2**
(43) Date of publication of application: **07.05.2008**
(21) Application number: 07019164.8
(22) Date of filing: 28.09.2007
(51) Int. Cl.: C01B 3/08

(54) **Hydrogen producing apparatus, fuel cell system and electronic equipment**

(30) Priority: 29.09.2006 JP 2006266666
(71) Applicant: HITACHI MAXELL, LTD., Ibaraki-shi, Osaka 567-8567 (JP)
(72) Inventor: Nakai, Toshihiro, Ibaraki-shi Osaka 567-8567 (JP); Saibara, Shoji, Ibaraki-shi Osaka 567-8567 (JP)
(74) Representative: Schorr, Frank Jürgen

(57) **Abstract**

A hydrogen producing apparatus according to the present invention includes a reactor containing a hydrogen generating material that reacts with water to generate hydrogen, a water containing vessel, a water supply portion for supplying water from the water containing vessel to the reactor, and a hydrogen outflow portion for leading out hydrogen from the reactor. The reactor and the water containing vessel are attachable to and detachable from the hydrogen producing apparatus. A measuring device for measuring at least one of a hydrogen generation rate from the reactor and a temperature of the reactor is provided. Removal of the reactor is restricted according to a measurement value of the measuring device.

## Description

The present invention relates to a hydrogen producing apparatus for allowing a hydrogen generating material and water to react with each other so as to produce hydrogen, a fuel cell system having the above-noted hydrogen producing apparatus as a hydrogen source, and electronic equipment including such a fuel cell system.

In recent years, with the widespread use of cordless equipment such as personal computers and mobile phones, there has been an increasing demand that batteries serving as their power sources have a smaller size and a higher capacity. Owing to its high energy density and its potential for reduction in size and weight, a lithium ion secondary battery is now put to practical use and growing in demand as a portable power source. However, this lithium ion secondary battery cannot ensure sufficient hours of continuous use for some types of cordless equipment.

In an attempt to solve the problem mentioned above, a fuel cell, for example, a polymer electrolyte fuel cell (PEFC) has been under development. The fuel cell can be used continuously as long as a fuel and oxygen are supplied. The PEFC, which uses a solid polymer electrolyte as an electrolyte, oxygen in the air as a positive active material and various kinds of fuels as a negative active material, has attracted attention as a battery achieving a higher energy density than the lithium ion secondary battery.

As the fuel to be used in the PEFC, hydrogen, methanol, etc. have been proposed and developed. Among them, a PEFC using hydrogen as its fuel offers promise because it enables a higher energy density.

In order to supply the fuel cell such as the PEFC with hydrogen, studies have been conducted on, for example, a method of supplying the hydrogen that is produced using a hydrogen producing apparatus capable of allowing a hydrogen generating material serving as a hydrogen source and water to react with each other so as to generate hydrogen. For instance, such a hydrogen producing apparatus is provided with a vessel that contains the water and a vessel that contains the hydrogen generating material and has a mechanism in which the water is supplied from the vessel containing the water to the vessel containing the hydrogen generating material (a reactor), the hydrogen generating material and the water are caused to react with each other in that reactor, and the generated hydrogen is supplied to the fuel cell via a hydrogen outflow pipe provided in the reactor.

For example, as the hydrogen producing apparatus having the above-noted mechanism, JP 2004-149394 A describes a hydrogen generating apparatus that is constituted by a tank for containing water and a reactor for containing metal that chemically reacts with the water so as to generate hydrogen, with the reactor being detachable.

In the apparatus described in JP 2004-149394 A, when the hydrogen generating reaction proceeds and the metal inside the reactor is consumed, the hydrogen generation rate falls. At this time, the used reactor is replaced with another reactor containing unreacted metal, thereby allowing a continuous hydrogen generation.

However, since the reactor is hot due to the hydrogen generating reaction between the metal and the water, it is sometimes advisable to hold the replacement of the reactor until the reactor is cooled down. Also, even if the water supply is stopped, the hydrogen generating reaction does not necessarily cease immediately. Thus, it is sometimes appropriate to hold the replacement of the reactor until the hydrogen generation rate falls.

The present invention was made by recognizing the above-noted necessity for a hydrogen producing apparatus that allows or restricts the reactor replacement according to a hydrogen generating state and a state of the reactor. It is an object of the present invention to provide a hydrogen producing apparatus capable of producing hydrogen continuously with safety, a fuel cell system using the hydrogen producing apparatus as a hydrogen source, and electronic equipment including the fuel cell system as a power source.

A hydrogen producing apparatus according to the present invention includes a reactor containing a hydrogen generating material that reacts with water to generate hydrogen, a water containing vessel containing the water, a water supply portion for supplying the water from the water containing vessel to the reactor, and a hydrogen outflow portion for leading out the hydrogen from the reactor. The reactor and the water containing vessel are attached so as to be attachable to and detachable from the hydrogen producing apparatus. A measuring device for measuring at least one of a hydrogen generation rate from the reactor and a temperature of the reactor is provided. A removal of the reactor is restricted according to a measurement value of the measuring device.

According to the present invention, it is possible to provide a hydrogen producing apparatus capable of producing hydrogen continuously with safety.

Further, a fuel cell system according to the present invention includes the above-described hydrogen producing apparatus according to the present invention, and a fuel cell.

Moreover, electronic equipment according to the present invention includes the above-noted fuel cell system according to the present invention.
FIG. 1 is a partially cross-sectional schematic view showing an exemplary hydrogen producing apparatus according to the present invention.
FIG. 2 is a schematic view showing a main portion of an exemplary hydrogen producing apparatus according to the present invention.
FIG. 3 is a schematic view showing a main portion of the hydrogen producing apparatus shown in FIG. 2 when its cover is open.

The hydrogen producing apparatus according to the present invention includes a reactor containing a hydrogen generating material that reacts with water to generate hydrogen, a water containing vessel containing the water, a water supply portion for supplying the water from the water containing vessel to the reactor, and a hydrogen outflow portion for leading out the hydrogen from the reactor. The reactor and the water containing vessel are attached so as to be attachable to and detachable from the hydrogen producing apparatus. Thus, when the hydrogen production accompanies the consumption of the hydrogen generating material in the reactor or the consumption of the water in the water containing vessel, the used reactor and water containing vessel can be replaced with a new reactor and a new water containing vessel, thereby making it possible to produce hydrogen continuously.

Further, the hydrogen producing apparatus according to the present invention includes a measuring device for measuring at least one of a hydrogen generation rate from the reactor and a temperature of the reactor, and a removal of the reactor can be restricted according to a measurement value of the measuring device. Accordingly, when the reactor is hot or when the hydrogen generation rate from the reactor is high, the removal of the reactor from the main body portion of the hydrogen producing apparatus is restricted, so that it becomes possible to increase the safety at the time of replacing the reactor. Consequently, hydrogen can be produced continuously with safety.

Further, the fuel cell system according to the present invention uses the hydrogen producing apparatus according to the present invention as a hydrogen source, thus making it possible to generate electric power continuously. Also, the fuel cell system according to the present invention is provided as a power source of electronic equipment, thus making it possible to use the electronic equipment continuously.

The following is a description of the hydrogen producing apparatus according to the present invention, with reference to the accompanying drawings.

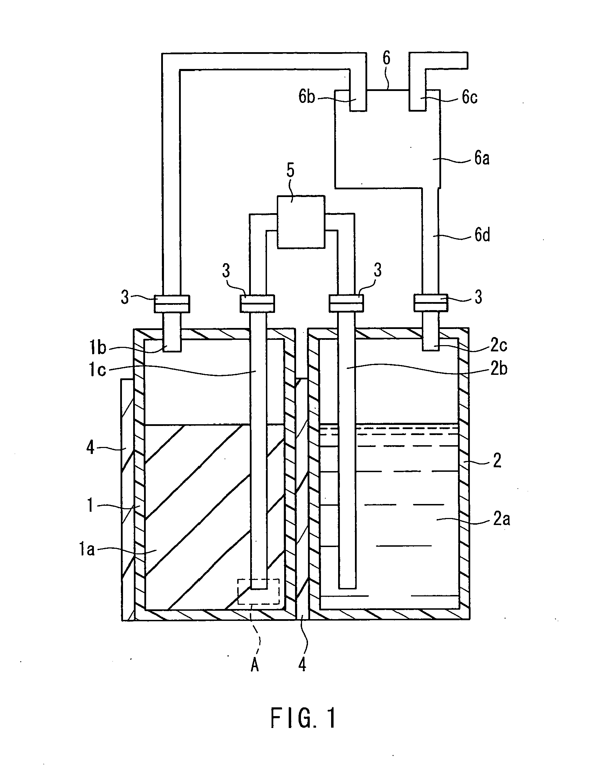

FIG. 1 is a partially cross-sectional schematic view showing exemplary constituent elements related to a hydrogen generating reaction in the configuration of the hydrogen producing apparatus according to the present invention. In FIG. 1, numeral 1 denotes a reactor, numeral 1a denotes a hydrogen generating material, numeral 1b denotes a hydrogen outflow pipe, and numeral 1c denotes a water supply pipe. Numeral 2 denotes a water containing vessel, numeral 2a denotes water, numeral 2b denotes a water supply pipe, and numeral 2c denotes a water collecting pipe. Numerals 3 each denotes a detachable portion between a main body portion and a vessel portion of the hydrogen producing apparatus, numeral 4 denotes a heat insulator, and numeral 5 denotes a pump. Further, numeral 6 denotes a gas-liquid separating part, numeral 6a denotes a water separating vessel, numeral 6b denotes a hydrogen inflow pipe, numeral 6c denotes a hydrogen outflow pipe, and numeral 6d denotes a water collecting pipe. FIG. 1 shows the cross-sections of only the reactor 1, the water containing vessel 2, the heat insulator 4 and the gas-liquid separating part 6.

The hydrogen producing apparatus of the present invention is used in the state where the reactor 1 and the water containing vessel 2 are attached to the main body portion. The main body portion of the hydrogen producing apparatus in the present invention refers to a portion other than the reactor 1 and the water containing vessel 2 (the portion including the heat insulator 4, the pump 5, pipes located above the detachable portions 3 in FIG. 1 and the gas-liquid separating part 6). In the hydrogen producing apparatus according to the present invention, the water 2a is supplied from the water containing vessel 2 to the reactor 1 containing the hydrogen generating material 1a, and the hydrogen generating material 1a and the water 2a are allowed to react with each other in the reactor 1 so as to produce hydrogen. The hydrogen generated in the reactor 1 passes through the hydrogen outflow pipe 1b and is supplied to equipment that needs hydrogen (for example, a fuel cell or the like).

The reactor 1 and the water containing vessel 2 are connected to the main body portion including the heat insulator 4 and the pump 5 via the detachable portions 3. As described above, when hydrogen is generated by the reaction between the hydrogen generating material 1a and the water 2a in the reactor 1, the hydrogen generating material 1a contained in the reactor 1 changes to a reaction product, whereas the water 2a contained in the water containing vessel 2 is consumed and decreases in amount. When the reaction of the hydrogen generating material 1a proceeds in the reactor 1 and reaches the state in which hydrogen is no longer generated, the reactor 1 and the water containing vessel 2 are removed from the detachable portions 3, and a new reactor that contains a hydrogen generating material and a new water containing vessel that contains water are attached to the main body portion via the detachable portions 3, thereby allowing a repeated hydrogen generation. Therefore, the hydrogen producing apparatus of the present invention can produce hydrogen continuously in a simple manner.

There is no particular limitation on the structure of the detachable portions 3. For example, it is possible to adopt a structure in which parts that are formed in a tubular shape (e.g., pipes) are provided on the side of the main body portion of the hydrogen producing apparatus, respective pipes of the reactor 1 and the water containing vessel 2 (the hydrogen outflow pipe 1b, the water supply pipes 1c and 2b and the water collecting pipe 2c) are inserted into those parts, and the connection portions (portions where the pipes are inserted) are sealed using a packing such as a rubber ring so as to prevent leakages of hydrogen and water.

Also, it is preferable to provide sealing portions at external tips of the hydrogen outflow pipe 1b, the water supply pipes 1c and 2b and the water collecting pipe 2c so that the hydrogen generating material 1a and the water 2a do not flow out from the reactor 1 and the water containing vessel 2, respectively, when the reactor 1 and the water containing vessel 2 are not attached to the detachable portions 3 of the hydrogen producing apparatus. The sealing portions can be, for example, valves that are closed when the reactor 1 and the water containing vessel 2 are not attached to the detachable portions 3 and open when they are attached to the detachable portions 3.

As shown in FIG. 1, it is preferable that the heat insulator 4 is disposed in at least part of an outer periphery of the reactor 1. By disposing the heat insulator 4 as described above, it is possible to prevent heat in the reactor 1 from being released to an outside of the reactor 1. Accordingly, a high reaction temperature in the reactor 1 can be maintained, thereby stabilizing the hydrogen generation. In the hydrogen producing apparatus, the hydrogen generating material is heated and reacts with water so as to generate hydrogen. However, even when the hydrogen generating material is heated, if the heat is released to the outside of the reactor 1 through an outer wall, the temperature of the hydrogen generating material does not rise, so that the efficiency of hydrogen generating reaction may decline, the hydrogen generating reaction may cease, or no hydrogen may be generated. In contrast, by disposing the heat insulator 4 as described above, it is possible to suppress the release of heat in the reactor 1 to the outside.

Especially when the reactor 1 and the water containing vessel 2 are attached to the hydrogen producing apparatus in such a manner as to be adjacent to each other, it is preferable that the heat insulator 4 is disposed at least between the reactor 1 and the water containing vessel 2. In the case where the reactor 1 and the water containing vessel 2 are adjacent to and in contact with each other, the heat in the reactor 1 is easily conducted to the side of the water containing vessel 2, so that the above-described problem of a drop of reaction temperature in the reactor 1 causing the hydrogen generating reaction to become less efficient or to cease may become more prominent. Also, if the reactor 1 and the water containing vessel 2 are made adjacent to each other with no heat insulator 4 interposed therebetween, the heat released from the reactor 1 may raise the temperature of water in the water containing vessel 2, causing the density of water to decrease, resulting in a decrease in the weight of the water to be supplied by the pump 5. This may lower the rate of hydrogen generation. Such a problem can be avoided by disposing the reactor 1 and the water containing vessel 2 in such a manner as to be adjacent to each other via the heat insulator 4.

It is more preferable that the heat insulator 4 is disposed on an entire outer periphery of the reactor 1. Further, the material of the heat insulator 4 preferably is a porous heat insulator such as Styrofoam or polyurethane foam, or a heat insulator having a vacuum insulation structure, for example.

When a hydrogen generating material that reacts with water exothermically is used in the hydrogen producing apparatus of the present invention, an inside and an outer surface of the reactor 1 become hot due to the heat of reaction. Also, even if the water supply to the reactor 1 is stopped, the hydrogen generation sometimes does not cease instantly but continues until a state is reached in which the water that is supplied is no longer present in the reactor 1. Therefore, in some cases, it becomes necessary to restrict the removal of the reactor 1 during the hydrogen generation and immediately after the ceasing thereof.

Accordingly, although not shown in FIG. 1, a measuring device for measuring at least one of the hydrogen generation rate from the reactor 1 and the temperature of the reactor 1 is provided in the hydrogen producing apparatus of the present invention for the sake of improved safety. According to the measurement value of this measuring device, the removal of the reactor 1 can be restricted.

The measuring device for measuring the hydrogen generation rate from the reactor 1 can be, for example, a flowmeter such as a Coriolis-type flowmeter, a Kármán-type flowmeter or a mass flowmeter. It is appropriate that this measuring device be connected to the hydrogen outflow pipe 6c and measure the amount of hydrogen passing therethrough.

Further, the measuring device for measuring the temperature of the reactor 1 can be, for example, a thermocouple, a thermistor or the like. It is appropriate that this measuring device be disposed in such a manner as to contact the reactor 1, or such that the measuring device does not contact the reactor 1 but heat is conducted easily from the reactor 1.

It is preferable that the hydrogen generation rate and the temperature of the reactor 1 measured by the measuring device are displayed on a display device such as a liquid crystal display or a dial plate. Instead of displaying the specific hydrogen generation rate and the specific temperature of the reactor 1, it may be also possible to determine whether the hydrogen generation rate exceeds a specified value or whether the temperature of the reactor 1 exceeds a specified value and indicate on the display device that the removal of the reactor 1 should be or need not be restricted.

Although the removal of the reactor 1 may be restricted by displaying information such as the hydrogen generation rate or the temperature of the reactor 1 measured by the above-noted measuring device, it is more desirable in terms of safety to provide a mechanical device that restricts the removal of the reactor 1. Examples of this mechanical device can include a cover that is disposed so as to cover the reactor 1, can be opened and closed and remains closed while the removal of the reactor 1 is restricted, a stopper that restricts the removal of the reactor 1, and the like. The above-noted cover can also prevent a human body from coming into direct contact with the reactor 1 while the removal of the reactor 1 is restricted.

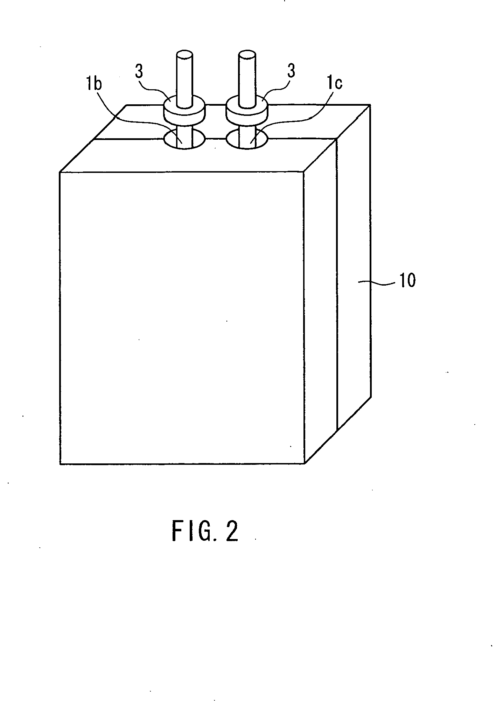

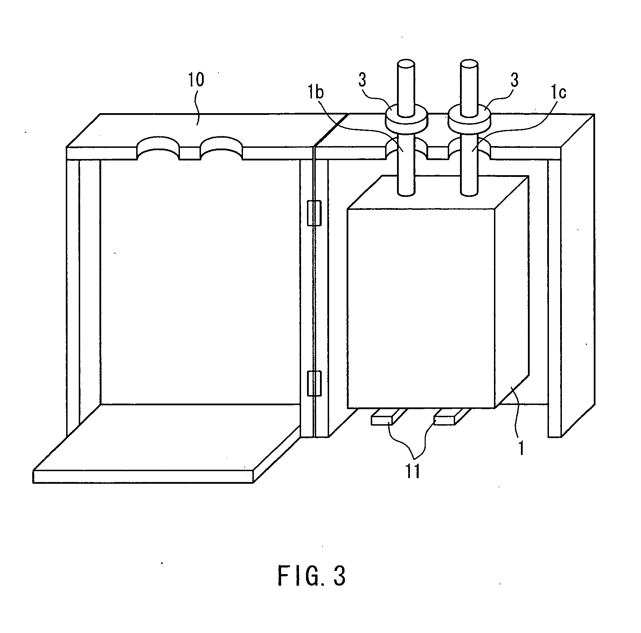

FIGs. 2 and 3 are schematic views showing a main portion of an exemplary hydrogen producing apparatus provided with the above-noted mechanical device in the present invention. In these figures, portions that are in common with FIG. 1 are assigned the same reference signs, and the redundant description thereof will be omitted in some cases.

The hydrogen producing apparatus shown in FIG. 2 is provided with a cover 10 that covers the reactor 1 (not shown in FIG. 2). When the hydrogen generation rate from the reactor 1 exceeds a specified value or the temperature of the reactor 1 is higher than a specified value, the cover 10 is locked so that no person can touch the reactor 1. On the other hand, when the hydrogen generation rate from the reactor 1 becomes equal to or lower than the specified value or the temperature of the reactor 1 becomes equal to or lower than the specified value, the cover 10 is unlocked, thus making it possible to open the cover 10 as shown in FIG. 3 and replace the reactor 1.

Moreover, as shown in FIG. 3, a stopper 11 that restricts the removal of the reactor 1 can also be provided. When the hydrogen generation rate from the reactor 1 exceeds a specified value or the temperature of the reactor 1 is higher than a specified value, the stopper 11 is activated so as to fix the reactor 1, and thus the removal of the reactor 1 is restricted. On the other hand, when the hydrogen generation rate from the reactor 1 becomes equal to or lower than the specified value or the temperature of the reactor 1 becomes equal to or lower than the specified value, the stopper 11 is released, thus making it possible to replace the reactor 1. Although FIG. 3 illustrates an example in which both of the cover 10 and the stopper 11 are provided, alternatively only one of them may be provided.

Further, in the case where the measuring device that measures both of the hydrogen generation rate from the reactor 1 and the temperature of the reactor 1 is provided, it is appropriate to activate the mechanical device that restricts the removal of the reactor 1 so that the reactor 1 becomes replaceable once both of the hydrogen generation rate and the temperature of the reactor 1 become equal to or lower than specified values.

Also, as shown in FIG. 3, the hydrogen producing apparatus of the present invention may include a plurality of mechanical devices for restricting the removal of the reactor 1 from the main body portion. The mechanical devices may be individually activated based on information from different measuring devices. For instance, in the example illustrated in FIG. 3, the stopper 11 may be activated based on the hydrogen generation rate from the reactor 1, whereas the lock of the cover 10 may be activated based on the temperature of the reactor 1. Furthermore, it is more preferable that the above-described display device is also used.

Although the hydrogen generation rate serving as a criterion for allowing the replacement of the reactor 1 varies depending on the installation condition of the hydrogen producing apparatus and the kind of the hydrogen generating material and cannot be defined indiscriminately, it can be, for example, equal to or lower than 30 ml/min and, more preferably, equal to or lower than 10 ml/min. Accordingly, when the hydrogen generation rate from the reactor 1 exceeds 30 ml/min (more preferably, when it exceeds 10 ml/min), it is appropriate to indicate on the display device that the removal of the reactor 1 should be restricted and/or to activate the mechanical device for restricting the removal of the reactor 1 in order to restrict the removal of the reactor 1 from the main body portion.

Also, the temperature of the reactor 1 serving as a criterion for allowing the replacement of the reactor 1 may be any temperature as long as a person can touch the reactor 1 with safety. For example, it is desirable that the temperature of the outer surface of the reactor 1 is equal to or lower than 50°C and, more preferably, is equal to or lower than 40°C. Therefore, when the temperature of the outer surface of the reactor 1 exceeds 50°C (more preferably, when it exceeds 40°C), it is appropriate to indicate on the display device that the removal of the reactor 1 should be restricted and/or to activate the mechanical device for restricting the removal of the reactor 1 in order to restrict the removal of the reactor 1 from the main body portion.

In the case where water is collected in the gas-liquid separating part 6 or the heat is conducted from the reactor 1, the water containing vessel 2 might also become hot similarly to the reactor 1. Thus, it is also preferable to measure the temperature of the water containing vessel 2 using a measuring device similarly to the reactor 1 and, when the temperature exceeds a specified value, restrict the removal of the water containing vessel 2 from the main body portion of the hydrogen producing apparatus.

The temperature of the water containing vessel 2 can be measured using the same measuring device as that used for measuring the temperature of the reactor 1. Also, similarly to the above, it is also possible to provide a display device that indicates the temperature of the water containing vessel 2 or whether the water containing vessel 2 can be removed.

Further, in order to restrict the removal of the water containing vessel 2, it is appropriate to indicate on the display device that the removal of the water containing vessel 2 should be restricted and/or to activate the mechanical device for restricting the removal of the water containing vessel 2, similarly to the reactor 1.

The time for replacing the reactor 1 can also be determined from the measurement value of the hydrogen generation rate or the temperature of the reactor 1. In other words, when the hydrogen production proceeds and the hydrogen generating material inside the reactor 1 is consumed, the hydrogen generation rate from the reactor 1 decreases gradually. Also, in the case of using the hydrogen generating material that reacts with water exothermically, when the hydrogen generating material is consumed and the reaction proceeds to cessation, the temperature of the reactor 1 lowers gradually. Accordingly, it is possible to estimate the time for replacing the reactor 1 from the variation in the hydrogen generation rate or the temperature of the reactor 1. Thus, the measurement value of the hydrogen generation rate or the temperature of the reactor 1, or information about the replacement of the reactor 1 is allowed to be displayed, thereby making it possible to replace the reactor 1 smoothly.

Moreover, in the case where the amount of water contained in the water containing vessel 2 is adjusted to be substantially the same as the amount necessary for reaction of all the hydrogen generating material 1a contained in the reactor 1, the temperature of the reactor 1 lowers as the hydrogen generating reaction proceeds to cessation, substantially simultaneously with the water containing vessel 2 becoming empty of water. Thus, in this case, it is also possible to determine the time for replacing the water containing vessel 2 based on the temperature of the reactor 1.

Also, as shown in FIG. 1, it is preferable that the hydrogen producing apparatus according to the present invention includes the gas-liquid separating part 6 for separating hydrogen and unreacted water that are discharged from the reactor 1, and a water collecting portion for returning the water separated in the gas-liquid separating part 6 to the water containing vessel 2.

In the hydrogen producing apparatus of the present invention, when the hydrogen generating material 1a and the water 2a are allowed to react with each other to generate hydrogen in the reactor 1, unreacted water is ejected together with the hydrogen, so that the mixture of the water and the hydrogen is sometimes discharged from the hydrogen outflow pipe 1b to the outside of the reactor 1. However, by providing the gas-liquid separating part 6 as in the hydrogen producing apparatus shown in FIG. 1, it becomes possible to separate the mixture of water and hydrogen discharged from the reactor 1 into water (liquid) and hydrogen (gas) in the gas-liquid separating part 6 and return the separated water to the water containing vessel 2. This allows a substantial supply amount of water to be reduced, so that the amount of the water 2a first prepared in the water containing vessel 2 can be reduced, thereby reducing the volume and weight of the hydrogen producing apparatus, resulting in a compact apparatus.

In the gas-liquid separating part 6, the water in the mixture of the water and hydrogen flowed in from the hydrogen inflow pipe 6b falls toward a lower portion of the water separating vessel 6a by gravity and is separated from the hydrogen. The separated water passes through the water collecting pipe 6d and the water collecting pipe 2c and then is collected in the water containing vessel 2. On the other hand, the separated hydrogen is discharged from the hydrogen outflow pipe 6c to the outside of the hydrogen producing apparatus. Similarly to the other pipes, the water collecting pipe 2c is detachable from the hydrogen producing apparatus by the detachable portion 3. The structure of the gas-liquid separating part 6 is not limited to that shown in FIG. 1. For example, it is also possible to configure the gas-liquid separating part using a gas-liquid separating film such as a polytetrafluoroethylene microporous film or a microporous film that is made from polyvinylidene fluoride, polyethylene, polypropylene or polyethersulfone and treated to be water repellent.

It is also possible to provide the reactor 1 or the water containing vessel 2 with a liquid-gas separating function. However, in that case, the structure of the reactor 1 or the water containing vessel 2 becomes complicated, thus making it difficult to make them compact. Accordingly, in the hydrogen producing apparatus of the present invention, it is preferable that the gas-liquid separating part is formed as a member different from the reactor 1 and the water containing vessel 2 as shown in FIG. 1. In this case, the reactor 1 and the water containing vessel 2 can be made to have a simpler structure, so that they can be made compact.

Moreover, it is preferable that the hydrogen producing apparatus of the present invention further includes a cooling portion (not shown) for cooling the mixture of water and hydrogen discharged from the reactor 1. In the above-described hydrogen producing apparatus, since the inside of the reactor 1 may become as hot as the boiling point of water, part of the water discharged as the mixture with the hydrogen is water vapor. Accordingly, by providing the cooling portion, it is possible to cool down the water vapor in the mixture described above and turn it to liquid water, thereby raising the water collection rate in the gas-liquid separating part 6. Therefore, it is preferable that the cooling portion is disposed between the reactor 1 and the gas-liquid separating part 6. The cooling portion can be, for example, a cooling device with a structure in which a metallic cooling fin is arranged so as to be in contact with the pipe. Further, it is also possible to use an air-cooling fan.

Although FIG. 1 illustrates the example in which the reactor 1 and the water containing vessel 2 are different members, the reactor 1 and the water containing vessel 2 can also be made as one piece. When they are made as one piece, they can be replaced more easily.

When the reactor and the water containing vessel are made as one piece, it is also preferable that a heat insulator is disposed between them. This makes it possible to avoid the above-described problem that may be caused in the case where the reactor and the water containing vessel are adjacent to each other.

The hydrogen generating material that can be used in the hydrogen producing apparatus of the present invention is not particularly limited as long as it is a material that reacts with water so as to generate hydrogen. However, it is preferred to use metals such as aluminum, silicon, zinc and magnesium, and alloys mainly containing at least one metallic element of aluminum, silicon, zinc and magnesium. In the case of using the alloys mentioned above, there is no particular limitation on elements other than the above-noted metallic elements that are mainly contained. Here, the phrase "mainly containing" means containing at least 80% by mass and more preferably at least 90% by mass of the element with respect to the overall alloy. Only one of the metals and alloys listed above may be used as the hydrogen generating material, or two or more of them may be used in combination. These hydrogen generating materials do not react with water easily at room temperature but, when heated, more easily react with water exothermically. The room temperature referred to in the instant specification is temperatures ranging from 20°C to 30°C.

Here, the reaction between aluminum and water is considered to proceed by any of the formulae (1) to (3) below, for example. The calorific value generated by the formula (1) below is 419 kJ/mol.

2Al + 6H₂O → Al₂O₃·3H₂O + 3H₂ (1)

2Al + 4H₂O → Al₂O₃·H₂O + 3H₂ (2)

2Al + 3H₂O → Al₂O₃ + 3H₂ (3)

The size of the above-described hydrogen generating material is not particularly limited, but it is desired that the mean particle diameter thereof is from 0.1 µm to 100 µm, more preferably, to 50 µm, for example. In general, the above-described hydrogen generating material has a surface on which a stable oxide film is formed. Accordingly, if the hydrogen generating material is in the form of plate, block and bulk with a particle diameter of 1 mm or larger, the reaction with water does not proceed even when the hydrogen generating material is heated, and substantially no hydrogen is generated in some cases. In contrast, setting the above-described hydrogen generating material to have a mean particle diameter of not larger than 100 µm reduces an effect of inhibiting reaction with water exerted by the oxide film. Accordingly, although the hydrogen generating material does not react with water easily at room temperature, it is more likely to react with water when heated, so that the hydrogen generating reaction is sustained. Also, when the hydrogen generating material is set to have a mean particle diameter of not larger than 50 µm, it can react with water even under a mild condition at about 40°C so as to generate hydrogen. On the other hand, if the mean particle diameter of the hydrogen generating material is set to be smaller than 0.1 µm, the ignitability thereof in the air increases, resulting in difficult handling, or the filling density thereof decreases, leading to a lower energy density. Consequently, it is desired that the mean particle diameter of the above-described hydrogen generating material be in the range noted above.

The mean particle diameter referred to in the instant specification means the value of the diameter of particles with an accumulated volume percentage of 50%, i.e., d₅₀. The mean particle diameter can be measured by, for example, a laser diffraction scattering method or the like. More specifically, it is a method of measuring a particle size distribution utilizing a scattering intensity distribution detected by irradiating an object to be measured dispersed in a liquid phase such as water with laser light. As a device for measuring the particle size distribution by the laser diffraction scattering method, it is possible to use "MICROTRAC HRA" manufactured by NIKKISO CO., LTD., for example.

Further, although the shape of the above-described hydrogen generating material is not particularly limited, it can be, for example, particles or flakes whose mean particle diameter falls within the above-noted range.

In order to start the reaction between the water and the hydrogen generating material easily, it is preferable to heat at least one of the hydrogen generating material and the water. However, as described earlier, when the water is heated in the water containing vessel 2, for example, the density of water may decrease with an increase in the temperature of the water, so that the weight of water to be supplied by the pump 5 may decrease, resulting in a lower rate of hydrogen generation. Thus, it is more preferable to heat only the hydrogen generating material or, if the water is to be heated, heat the water after it passes through the pump 5. It is desired that the heating temperature be from 40°C, more preferably, from 60°C to 100°C. The temperature that can maintain the above-noted exothermic reaction between hydrogen generating material and water is usually equal to or higher than 40°C. Once the exothermic reaction starts and the hydrogen is generated, an internal pressure of the reactor 1 sometimes rises so as to raise the boiling point of water, and the temperature inside the reactor 1 sometimes reaches 120°C. However, in terms of the control of the hydrogen generating rate, it is preferable to set the temperature to be equal to or lower than 100°C.

It is appropriate that the above-noted heating be carried out at least when the above-described exothermic reaction starts. Once the exothermic reaction between water and hydrogen generating material starts, the heat generated by that reaction helps to sustain the reaction that follows, and therefore, the heating may be stopped after the reaction starts. Also, it may also be possible to carry out the heating and supply the water to the reactor 1 at the same time.

Although the method of the heating is not particularly limited, the heating can be carried out by utilizing heat generated by passing an electric current through a resistor. For example, such a resistor is attached to an external portion of the reactor 1 and/or the water containing vessel 2 (preferably, only the reactor 1) and allowed to generate heat, and the reactor 1 and water containing vessel 2 are heated externally, thereby making it possible to heat at least one of the hydrogen generating material and the water. The kind of the above-noted resistor is not particularly limited. For example, silicon carbide, a PTC thermistor and metallic heating elements such as a nichrome wire and a platinum wire can be used.

Further, the above-described heating can also be carried out by heat generated by a chemical reaction of a heat generating material. Such a heat generating material can be a material that reacts with water exothermically to form hydroxide or hydrate, a material that reacts with water exothermically to generate hydrogen, or the like. Examples of the above-noted material that reacts with water exothermically to form hydroxide or hydrate can include oxides of an alkali metal (lithium oxide and the like), oxides of an alkaline-earth metal (calcium oxide, magnesium oxide and the like), chlorides of an alkaline-earth metal (calcium chloride, magnesium chloride and the like) and sulfated compounds of an alkaline-earth metal (calcium sulfate and the like). Examples of the above-noted material that reacts with water exothermically to generate hydrogen can include alkali metals (lithium, sodium and the like) and alkali metal hydrides (sodium borohydride, potassium borohydride, lithium hydride and the like). These materials can be used alone or in combination of two or more. Also, the material that reacts with water exothermically to generate hydrogen can be used also as the hydrogen generating material.

It is possible to place the above-described heat generating material together with the hydrogen generating material 1a in the reactor 1 and add water to them so as to cause an exothermic reaction between the water and the heat generating material, thereby directly heating the hydrogen generating material 1a and the water inside the reactor 1. Further, it is also possible to arrange the above-described heat generating material outside the reactor 1 and the water containing vessel 2 (preferably only the reactor 1) and allow it to generate heat so as to heat the reactor 1 and the water containing vessel 2 externally, thereby heating at least one of the hydrogen generating material 1a and the water 2a.

As the heat generating material described above, also known is a material that reacts exothermically with a material other than water, for example, a material that reacts exothermically with oxygen such as iron powder. Since oxygen has to be introduced for the exothermic reaction, such a material is preferably arranged outside the reactor 1 rather than placed in the reactor 1.

In the case of placing the above-noted heat generating material together with the hydrogen generating material 1a in the reactor 1 and adding water to them for heating, the heat generating material may be used as a mixture prepared by dispersing and mixing the heat generating material uniformly or nonuniformly with the hydrogen generating material 1a. However, the heat generating material is more preferably arranged in such a manner as to be concentrated in the reactor 1. Particularly preferably, the heat generating material is concentrated in the vicinity A of an internal tip of the water supply pipe 1c (see FIG. 1) inside the reactor 1. By concentrating the heat generating material inside the reactor 1 in this way, it is possible to shorten the time from the start of water supply until the hydrogen generating material is heated, thus allowing a prompt hydrogen production.

The material and shape of the reactor 1 are not particularly limited as long as the reactor 1 can hold the hydrogen generating material that reacts with water exothermically to generate hydrogen and can be attached to and detached from the main body portion of the hydrogen producing apparatus. However, it is preferable to employ the material and shape that do not cause leakages of water and hydrogen from the hydrogen outflow pipe 1b and the water supply pipe 1c. More specifically, the reactor 1 is preferably formed of a material that does not transmit water or hydrogen easily and does not lead to the breakage of the reactor 1 even when heated up to about 100°C. For example, it is possible to use metals such as aluminum and iron, and resins such as polyethylene (PE) and polypropylene (PP). Further, the reactor 1 can have a prismatic shape, a columnar shape or the like.

The reaction product generated by the reaction between the hydrogen generating material 1a and the water usually has a larger volume than the hydrogen generating material 1a. Accordingly, in order to prevent the reactor 1 from breaking at the time of such volume expansion accompanying the generation of the reaction product, it is preferable that the reactor 1 is deformable according to the reaction between the hydrogen generating material 1a and the water. Considering this, among the materials listed above, the resins such as PE and PP are more preferable for the material of the reactor 1.

The reactor 1 is provided with a water supply portion for supplying water to an inside of the reactor 1 and a hydrogen outflow portion for leading out hydrogen from the inside. There is no particular limitation on the water supply portion. For example, the water supply portion may be the water supply pipe 1c as shown in FIG. 1 or a mere water supply port, etc. There is no particular limitation on the hydrogen outflow portion. For example, the hydrogen outflow portion may be the hydrogen outflow pipe 1b as shown in FIG. 1 or a hydrogen outflow port, etc. Furthermore, it is preferable that the hydrogen outflow pipe and the hydrogen outflow port, etc. are provided with a filter for confining the hydrogen generating material 1a in the reactor 1. This filter is not particularly limited as long as it has a property of transmitting gas and not transmitting liquid and solid easily, and can be, for example, a non-woven fabric made from PP.

The water containing vessel 2 is not particularly limited as long as it can be attached to and detached from the main body portion of the hydrogen producing apparatus, and can be, for example, a tank containing water. In the case where the reactor 1 is deformable according to the volume expansion accompanying the generation of the reaction product from the hydrogen generating material 1a and the water, it is preferable that the water containing vessel 2 is also deformable according to the reaction between the hydrogen generating material 1a and the water. Especially when the reactor 1 and the water containing vessel 2 are adjacent to each other or they are formed as one piece, the water containing vessel 2 can be deformed with the reactor 1, so that the breakage of the water containing vessel 2 can be prevented. Thus, in this case, it is preferable that the water containing vessel 2 is formed of a deformable material, for example, resins such as PE and PP.

It is preferable that the hydrogen producing apparatus of the present invention is provided with a pressure relief valve. For example, even when an increase in the hydrogen generating rate raises the internal pressure of the hydrogen producing apparatus, hydrogen is discharged through the pressure relief valve to the outside of the apparatus, thereby making it possible to prevent the apparatus from breaking due to bursting or the like. The pressure relief valve may be disposed anywhere as long as the hydrogen generated in the reactor 1 can be discharged. For example, the pressure relief valve may be provided at any locations between the hydrogen outflow pipe 1b and the gas-liquid separating part 6.

The above description has been directed to the configuration of the hydrogen producing apparatus according to the present invention with reference to FIGs. 1 to 3. However, FIGs. 1 to 3 merely illustrate an example of the hydrogen producing apparatus of the present invention. The hydrogen producing apparatus of the present invention is not limited to those having the configuration illustrated by FIGs. 1 to 3.

In accordance with the above-described hydrogen producing apparatus of the present invention, the actual amount of generated hydrogen with respect to the theoretical amount of generated hydrogen assuming that all the hydrogen generating material has reacted (in the case of aluminum, the theoretical amount of generated hydrogen per gram is about 1360 ml at 25°C) is at least about 50% and more preferably at least 70%, though depending on the conditions. This shows that hydrogen can be generated efficiently.

Now, the fuel cell system and the electronic equipment including this fuel cell system according to the present invention will be described. The fuel cell system of the present invention may have any configuration without particular limitation as long as it includes the hydrogen producing apparatus of the present invention as a hydrogen source for the fuel cell. It is possible to employ various configurations that have been adopted in a conventionally known fuel cell system.

Further, although the electronic equipment of the present invention includes the above-noted fuel cell system as its power source, it is not limited to electronic equipment whose power source is exclusively the above-noted fuel cell system. The electronic equipment of the present invention may also use other power sources such as a commercial power source and a secondary battery.

Hereinafter, the present invention will be described in detail by way of examples. It should be noted that the following examples do not limit the present invention.

### Example 1

Using the hydrogen producing apparatus with the configuration shown in FIG. 1, hydrogen was produced as follows. As the reactor 1, a prismatic vessel that was made from PP and had an internal volume of 65 cm³ was used. As the hydrogen outflow pipe 1b and the water supply pipe 1c, aluminum pipes having an internal diameter of 2 mm and an external diameter of 3 mm were used. The water containing vessel 2 also had the same structure as the reactor 1, and aluminum pipes that were the same as the water supply pipe 1c, etc. were also used as the water supply pipe 2b and the water collecting pipe 2c. The detachable portions 3 had a structure in which respective pipes of the reactor 1 and the water containing vessel 2 were inserted into tubular-formed parts with an internal diameter of 3.5 mm located on the side of the hydrogen producing apparatus. In each of the tubular parts, a rubber ring was disposed, thereby suppressing the leakage of hydrogen and water from the detachable portions 3. Further, the heat insulator 4 that was made of Styrofoam and had a thickness of 5 mm was disposed so as to surround the outer periphery of the reactor 1.

First, 21 g of aluminum powder with a mean particle diameter of 6 µm as the hydrogen generating material 1a and 3.5 g of calcium oxide as the heat generating material were placed in the reactor 1, and then the reactor 1 was sealed with a lid to which the hydrogen outflow pipe 1b and the water supply pipe 1c were attached. Then, 50 g of water was poured into the water containing vessel 2, and the reactor 1 and the water containing vessel 2 were connected to the detachable portions 3 as shown in FIG. 1.

The cover 10 made of a resin as shown in FIGs. 2 and 3 was disposed outside the heat insulator 4 that was disposed on the outer periphery of the reactor 1. Until the temperature of the reactor 1 drops to 40°C or lower, the cover 10 did not open so that no one was able to touch the reactor 1. Furthermore, as the display device for indicating that the temperature of the reactor 1 exceeded the specified temperature (i.e., 40°C), an LED lamp was disposed in such a manner as to allow visual recognition.

Also, the stopper 11 formed of movable resin protrusions as shown in FIG. 3 was disposed on the side of the bottom surface of the reactor 1. The stopper 11 was set to protrude when the hydrogen generation rate from the reactor 1 exceeded 20 ml/min so that the reactor 1 was not detachable, and to retract when the hydrogen generation rate was equal to or lower than that value so that the reactor 1 was detachable. Moreover, as the display device for indicating that the hydrogen generation rate from the reactor 1 exceeded the specified value (i.e., 20 ml/min), an LED lamp was disposed in such a manner as to allow visual recognition.

Next, using the pump 5, water was supplied continuously from the water containing vessel 2 to the reactor 1 at a water volume of 1.1 g/min.

In the hydrogen producing apparatus in Example 1, hydrogen was generated immediately after the water was supplied, and the hydrogen generating rate and the surface temperature of the reactor 1 rose rapidly. After about 10 minutes, the hydrogen generating rate and the surface temperature of the reactor 1 plateaued, and the hydrogen was generated at a constant hydrogen generating rate of about 150 ml/min. After a lapse of 100 minutes, the hydrogen generating rate decreased gradually. After 120 minutes, it reached 100 ml/min or lower, and thus, the water supply to the reactor 1 was stopped.

After a lapse of 25 minutes since the water supply to the reactor 1 was stopped, the surface temperature of the reactor 1 fell down to 40°C or lower, so that it became possible to open the cover 10 that covered the reactor 1. Further after 5 minutes, the hydrogen generation rate reached 20 ml/min or lower, and the stopper 11 of the reactor 1 retracted, making it possible to detach the reactor 1 from the main body portion of the hydrogen producing apparatus. Then, the reactor 1 was removed, and a new reactor was attached. Also, the water containing vessel 2 was replaced with a new water containing vessel that was filled with water. As a result, it was possible to generate hydrogen also after the replacement of the reactor and the water containing vessel.

It was confirmed that, by repeating the above-described procedure, it was possible to generate hydrogen continuously with safety.

### Example 2

Hydrogen generated using a hydrogen producing apparatus similar to that in Example 1 was supplied to a fuel cell, thus generating electric power. In the present example, a polymer electrolyte fuel cell having a configuration in which 6 unit cells with an electrode area of 22 cm² were connected in series was used. When electricity was discharged at a constant voltage of 3.9 V with a load being connected, an output as high as about 14 W was obtained. This showed that the hydrogen producing apparatus of the present invention was effective as a fuel source of a small-size portable fuel cell. Also, as becomes clear from the result of Example 1, the hydrogen producing apparatus of the present invention can supply hydrogen to the fuel cell continuously for a long time. Therefore, by using as a power source of electronic equipment the fuel cell system into which the hydrogen producing apparatus of the present invention is incorporated, it becomes possible to operate the electronic equipment stably for a long time.

## Claims

1. A hydrogen producing apparatus comprising:
a reactor (1) containing a hydrogen generating material (1a) that reacts with water (2a) to generate hydrogen;
a water containing vessel (2);
a water supply portion (26) for supplying water from the water containing vessel (2) to the reactor (1); and
a hydrogen outflow portion (16) for leading out hydrogen from the reactor (1);
wherein the reactor (1) and the water containing vessel (2) are attachable to and detachable from the hydrogen producing apparatus,
a measuring device for measuring at least one of a hydrogen generation rate from the reactor (1) and a temperature of the reactor (1) is provided, and
removal of the reactor (1) is restricted according to a measurement value of the measuring device.

2. The hydrogen producing apparatus according to claim 1, wherein removal of the reactor (1) is restricted when the hydrogen generation rate exceeds a specified value.

3. The hydrogen producing apparatus according to claim 1, wherein removal of the reactor (1) is restricted when the temperature of the reactor (1) exceeds a specified value.

4. The hydrogen producing apparatus according to claim 1, wherein a cover (10) for restricting removal of the reactor (1) is disposed so as to cover the reactor (1).

5. The hydrogen producing apparatus according to claim 1, wherein a stopper (11) for restricting removal of the reactor (1) is provided.

6. The hydrogen producing apparatus according to any of claims 1 to 5, wherein a display device for indicating that removal of the reactor should be restricted is provided in order to restrict removal of the reactor (1) .

7. The hydrogen producing apparatus according to any of claims 1 to 6, further comprising a measuring device for measuring a temperature of the water containing vessel (2),
wherein removal of the water containing vessel (2) is restricted when the temperature of the water containing vessel exceeds (2) a specified value.

8. The hydrogen producing apparatus according to any of claims 1 to 7, further comprising
a gas-liquid separating portion (6) for separating water from a mixture of water and hydrogen discharged from the reactor (1), and
a water collecting portion (6d) for collecting water separated by the gas-liquid separating portion (6) into the water containing vessel.

9. A fuel cell system comprising:
the hydrogen producing apparatus according to any of claims 1 to 8; and
a fuel cell.

10. An electronic equipment comprising the fuel cell system according to claim 9.
